# EUROPEAN PATENT SPECIFICATION

(11) **EP 3 615 225 B1**
(45) Date of publication and mention of the grant of the patent: **08.07.2026**
(21) Application number: 18819995.4
(22) Date of filing: 27.04.2018
(51) Int. Cl.: B05B 7/24, B05B 13/06, B05B 15/68, B05B 7/04, B05B 1/30, B05B 3/10, B05B 7/12, F16L 101/16

(54) **A COATING APPARATUS**
BESCHICHTUNGSVORRICHTUNG
APPAREIL D'APPLICATION DE REVÊTEMENT

(30) Priority: 27.04.2017 US 201715499874; 17.01.2018 US 201862618363 P
(43) Date of publication of application: 04.03.2020
(73) Proprietor: Kronz, Michael, Verona, WI 53593 (US)
(72) Inventor: Kronz, Michael, Verona, WI 53593 (US)
(74) Representative: White, Jonathan Patrick
(86) International application number: PCT/US2018/029701
(87) International publication number: WO 2018/236467

(56) References cited:
- EP-A1- 2 230 021
- EP-A2- 0 233 384
- US-A- 3 233 580
- US-A- 4 216 738
- US-A- 4 405 086
- US-A- 5 181 962
- US-A1- 2011 244 125
- US-A1- 2014 251 206
- US-B2- 6 745 955

## Description

### Field of the invention.

### Background of the invention.

The present invention relates to a coating apparatus.

More specifically, the present invention relates to a coating apparatus for applying an activated coating onto an internal surface of a conduit.

### Background information.

The coating of an internal surface of a conduit such as a water supply line or a sewage drainage line or the like presents many problems. For example, when a water supply line deteriorates to the point of leaking, valuable water is wasted and there is a danger that contaminants will seep into the supply line thereby posing potential health hazards. Also, in the case of a municipal sewage line, if the internal surface becomes corroded, there is a very definite possibility of leakage of raw sewage into the environment thus producing a health and environmental hazard.

However, repairing such pipelines not only requires detection of such leakage but often the digging up of the pipeline and replacement thereof with a new line. Obviously, this procedure becomes extremely difficult and costly when the pipe system runs underground through a city or other municipality.

More recently, proposals have been made which include repairing the pipe in situ by internally coating the pipe with an impermeable coating material. Usually, this internal coating process is preceded by a procedure which includes cleaning and preparing the internal surface of the pipe so that it will reliably receive the applied protective coating.

Robotic machines have been developed for the application of activated coatings. Such activated coatings require the mixing of at least two components and the application of such mixed components almost immediately to the surface to be coated. The activated coating may be applied in a rotary motion so that the coating progressively coats the internal surface as the robotically controlled machine progresses through the pipeline.

Typically, the activated coating mixes during passage thereof through a static mixer so that the mixed coating can be supplied to a rotating coating application head or the like. However, using this method, the whole coating operation must of necessity be carried out as a single operation because of the rapid set time of the activated coating. For example, in these prior art machines, if the coating operation is interrupted, it becomes necessary to retract the machine to the starting point of the coating operation. The static mixer must then be removed and discarded. Also, the coating head and any plumbing or components used to deliver the premixed material must be immediately flushed with solvent to remove all of the residual activated coating from the equipment. Furthermore, such used solvent must then be collected and disposed of in an environmentally safe manner.

US6,745,955 to Kronz discloses a robotic machine for internally coating pipes including a purging system for removing activated coating material from the machine after the coating process has been completed. However, the present invention provides a robotic apparatus for internally coating pipes having a very small internal diameter of approximately 3 inches and virtually eliminates the need for a purging system.

The present invention provides a unique arrangement which includes a high pressure mixing gun which intimately mixes the coating components to activate the same. The high-pressure mixed material then passes through a larger diameter exit port converting it to a low-pressure stream. The activated coating is thereafter fed into a conical design spin-head which is constantly rotated at a high speed. This atomizes the activated coating and centrifugally delivers it to the pipe wall interior for a smooth and consistent application of the coating.

Therefore, a primary feature of the present invention is the provision of a coating apparatus which combines a high pressure mixing gun with a rotary atomizer.

Another feature of the present invention is the provision of a coating apparatus which combines a high pressure mixing gun with an atomizer so that the system can be started and stopped at will without partial tear-down and/or solvent flushing.

A further feature of the present invention is the provision of a coating apparatus which combines a high pressure mixing gun with an atomizer which provides an enhanced coating which is both smooth and uniform when the coating is applied onto an internal surface of a pipeline.

Another feature of the present invention is the provision of a coating apparatus which provides a smooth and uniform coating when the coating is applied onto an internal surface of a very small diameter pipeline such as a 3inchinternal diameter pipeline.

Yet a further feature of the present invention is the provision of coating apparatus which avoids the need for purging activated coating thus enabling a user of the apparatus to stop the coating operation and later continue with the coating operation without the need for the introduction of a solvent to flush out the activated coating.

Other features and advantages of the present invention will be readily apparent to those skilled in the art by a consideration of the detailed description of a preferred embodiment of the present invention contained herein.

EP2230021 (A1) discloses a device for applying an internal coating in tubes comprises a nozzle, a mixing casing arranged in connection with the nozzle and configured to receive at least two coating material components. Driving means intended to be located outside the tube to be coated and configured to drive an elongated flexible member to rotate also causes said nozzle to rotate by being connected to said flexible member while throwing said coating material substantially radially outwards towards inner walls of the tube. Mixing members inside a mixing compartment of the mixing casing are brought to carry out a stirring movement inside said compartment for mixing the coating material components arriving thereto to a substantially homogenous mixture, which is drained to said nozzle.

US3233580 (A) discloses a mixing and applying apparatus for surface coating interior surfaces of hollow cylindrical articles with a mixed material while the material is in a plastic state. The invention features a nozzle device adapted to be rotated about the longitudinal axis to mix a plurality of substances delivered in discrete proportions to the device and to apply by centrifugal force the resulting mixture to the interior surface of the article.

US4216738 (A) discloses a method of cleaning and renewing sections of pipe is disclosed wherein the flow of fluid through the pipe is shut off and a scrubbing element is inserted into one end of the pipe. The scrubbing element is advanced through the pipe while at the same time ejecting a cleaning fluid to clean the inside of the pipe section. The inner surface of the section is then scraped to remove materials adhering to the inside of the section which were not previously removed. The removed materials are then flushed from the inside of the section and the section is dried. The inside of the section is then painted by passing a painting device through the section which applies a mixture of paint and hardening liquid to the inside of the pipe. A device is also disclosed for coating the inner surface of a pipe which comprises a casing, an air motor and a cowling operatively connected to the motor for scattering coating liquid fed to the device. The apparatus may further comprise a mixing device for mixing coating liquids prior to applying them to the inner surface of the pipe.

US4405086 (A) discloses an atomizer wheel for the atomization of liquid color, particularly a lacquer sprayer, having an atomizer bell which is rotatable around a central axis and on its axially front end side has an annular coaxial overflow surface and on its base a central axial opening and is provided above its base with a deflection part of rotational symmetry.

EP0233384 (A2) discloses a Process and device for distributing a liquid in a gaseous medium, in which process the liquid is introduced into a hollow body having a number of identical outlets, provided rotation-symmetrically relative to a vertical axis, and in which process an element is present in the hollow of the body, which element is at least partly in contact with the liquid and is moved up and down in a direction parallel to the vertical axis. At least the part of the body that is provided with outlets is moved up and down in a direction parallel to the vertical axis or the body is moved around the vertical axis. The frequency f of the movement of the body is equal to the product of a proportionality constant k and the quotient of the average flow rate of the liquid through the outlets of the body and the diameter d of an outlet, in which k is between 0.25 and 0.5, f is expressed in vibrations per second, v in metres per second and d in metres.

### Summary of the invention.

According to the invention, there is provided an apparatus for applying an activated coating onto an internal surface of a conduit as defined in the appended claims.

The present invention relates to a coating apparatus for applying an activated coating onto an internal surface of a conduit, the coating being activated by mixing at least a first and a second component. The apparatus includes a high-pressure mix gun for mixing the at least first and second components such that the activated coating is generated. A rotary atomizer is operatively connected to and cooperates with the high pressure mix gun for receiving the activated coating from the high pressure mix gun. The rotary atomizer cooperates with the activated coating such that the activated coating is atomized so that application of the atomized activated coating onto the internal surface of the conduit is permitted.

The high-pressure mix gun includes a housing defining a first and a second inlet. The first inlet is in fluid communication with the first component.

Also, the second inlet is in fluid communication with the second component.

Moreover, the housing defines a mixing chamber which is in fluid communication with the first and the second inlet.

Additionally, the housing defines a bore having a first and a second end, the bore being in fluid communication with the mixing chamber.

A rod has a first and a second extremity, the rod slidably extending through the bore. The arrangement is such that when the rod is disposed in a first axial disposition thereof relative to the bore, a flow of the activated coating past the first end of the bore is permitted. However, when the rod is disposed in a second axial disposition thereof relative to the bore, a flow of the activated coating past the first end of the bore is inhibited.

The first extremity of the rod cooperates with the first end of the bore such that when the rod is in the second axial disposition thereof, the first extremity of the rod seats relative to the first end of the bore for sealing the first end of the bore for preventing the flow of activated coating out of the housing.

Also, a body is disposed axially spaced relative to the housing, the body defining an enclosure for the reception therein of the second extremity of the rod.

The enclosure has an inner surface of cylindrical configuration.

Additionally, a piston is secured to the second extremity of the rod, the piston sealingly cooperating with the inner surface of the enclosure. The arrangement is such that axial movement of the piston within the enclosure is permitted.

The enclosure has a first and a second compartment such that the piston is disposed between the first and a second compartments.

Also, a source of pressurized fluid is selectively connected to the first compartment for moving the piston and the rod axially within the enclosure such that the first extremity of the rod is disposed in the first disposition thereof for permitting the flow of activated coating.

Moreover, the source of pressurized fluid is selectively connected to the second compartment for moving the piston and the rod axially within the enclosure such that the first extremity of the rod is disposed in the second disposition thereof for inhibiting the flow of activated coating.

A first connector is connected to the first compartment for connecting the first compartment to the source of pressurized fluid.

Also, a second connector is connected to the second compartment for connecting the second compartment to the source of pressurized fluid.

A control device is disposed remote from the enclosure for selectively controlling connection of the source of pressurized fluid to the first and the second connectors for controlling axial movement of the rod between the first and the second dispositions thereof.

Furthermore, a first pump is disposed remote from the first inlet of the high-pressure mix gun. The first pump has an inlet port and an outlet port, the outlet port of the first pump being connected to the first inlet of the high-pressure mix gun. The first pump is used to pressurize the first component to a pressure within a range of 10,342,135 Pa to 24,131,625 Pa (1500 to 3500 pound per square inch).

A second pump is disposed remote from the second inlet of the high-pressure mix gun. The second pump has a further inlet port and a further outlet port. The further outlet port of the second pump is connected to the second inlet of the high-pressure mix gun. The second pump pressurizes the second component to a pressure within a range of 10,342,135 Pa to 24,131,625 Pa (1500 to 3500 pound per square inch).

Additionally, the rotary atomizer has a rearward portion and a forward portion.

The rearward portion of the rotary atomizer defines a recess which cooperates with and is supported by the high-pressure mix gun for permitting rotation of the rotary atomizer relative to the high-pressure mix gun so that the rotary atomizer rotates about a longitudinal axis which extends through the high-pressure mix gun.

Also, the forward portion of the rotary atomizer defines an inside surface of conical shaped configuration.

The conical shaped configuration of the inside surface of the forward portion has an apex which is disposed in a vicinity of the activated coating generated by the high-pressure mix gun. The arrangement is such that the activated coating generated by the high-pressure mix gun flows from the high-pressure mix gun through an aperture defined by the apex of the inside surface, so that rotation of the inside surface guides and spreads the activated coating so that the activated coating is applied to the internal surface of the conduit.

A bearing is disposed between the recess of the rearward portion of the rotary atomizer and the high-pressure mix gun for facilitating support of the rotary atomizer and the rotation thereof about the high-pressure mix gun.

More specifically, the bearing includes a first annular row of ball bearings. A second annular row of ball bearings is disposed axially spaced relative to the first annular row of ball bearings.

Also, a motor is drivingly connected to the rotary atomizer for rotating the rotary atomizer about the high-pressure mix gun.

The high-pressure mix gun is disposed between the motor and the rotary atomizer.

Moreover, the apparatus further includes a drive shaft having a first and a second end, the motor being drivingly connected to the second end of the drive shaft.

A drive belt cooperates with the first end of the drive shaft such that the drive belt is driven by the drive shaft. The drive belt extends around the rotary atomizer such that the drive belt drivingly cooperates with the rotary atomizer for rotating the same about the high-pressure mix gun.

Furthermore, a plate is provided for deflecting the activated coating towards the conical shaped configuration of the inside surface such that the apex of the conical shaped inside surface is disposed between the plate and the high-pressure mix gun.

The plate is secured to the forward portion of the rotary atomizer so that activated coating flows from the high-pressure mix gun through the aperture and is deflected and atomized by the rotating plate onto the rotating conical shaped configuration of the inside surface of the forward portion. The arrangement is such that rotation of the forward portion urges the atomized activated coating to move by centrifugal force and guided by the inside surface for application onto the internal surface of the conduit to be coated.

Many modifications and variations of the present invention will be readily apparent to those skilled in the art by a consideration of the detailed description contained hereinafter taken in conjunction with the annexed drawings which show a preferred embodiment of the present invention.

Included in such modifications would be the provision of a purging system if required for certain types of application. The present disclosure also refers to the mixing arrangement disclosed in the aforementioned US6,745,955 to Kronz.

### Brief description of the drawings.

Fig. 1 is a side sectional view partially in section of a coating apparatus according to the present invention for applying an activated coating onto an internal surface of a conduit;
Fig. 2 is a sectional view taken on the line 2-2 of Fig. 1;
Fig. 3 is a similar view to that shown in Fig. 1 but shows the rod disposed in a second axial disposition thereof relative to the bore;
Fig. 4 is an enlarged view of the rotary atomizer shown in Fig. 1;
Fig. 5 is an exploded perspective view of the further embodiment of the present invention;
Fig.6 is a side elevational view partially in section of the apparatus shown in Fig. 5; and
Fig. 7 is a similar view to that shown in Fig. 6 but shows the apparatus in an inoperative disposition thereof.

### Detailed Description of the drawings.

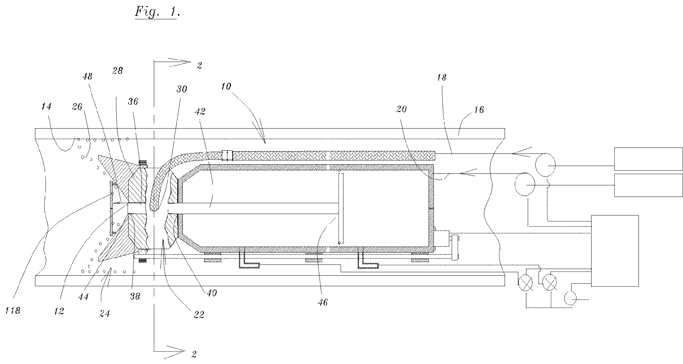

Fig. 1 is a side sectional view partially in section of a coating apparatus generally designated 10 according to the present invention for applying an activated coating 12 onto an internal surface 14 of a conduit 16. As shown in Fig. 1, the coating 12 is activated by mixing at least a first and a second component18 and 20 respectively. The apparatus 10 includes a high-pressure mix gun generally designated 22 for mixing the at least first and second components 18 and 20 respectively such that the activated coating 12 is generated. The high-pressure mix gun 22 is of a type disclosed in detail in US3,799,403 assigned to Ransburg Corporation of Indianapolis, Ind. Additionally; the high-pressure mix gun 22 is of a type disclosed in detail in US7,527,172 assigned to Graco Minnesota Inc. of Minneapolis Minnesota. A rotary atomizer generally designated 24 such as a rotary atomizer spin head is operatively connected to and cooperates with the high pressure mix gun 22 for receiving the activated coating 12 from the high pressure mix gun 22. The rotary atomizer 24 cooperates with the activated coating 12 such that the activated coating 12 is atomized so that application of the atomized activated coating 26 onto the internal surface 14 of the conduit16 is permitted.

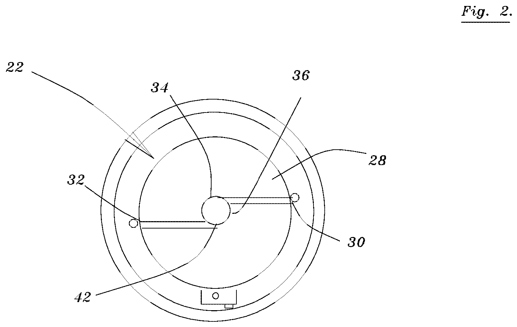

Fig. 2 is a sectional view taken on the line 2-2 of Fig. 1. As shown in Fig. 2, the high-pressure mix gun 22 includes a housing 28 defining a first and a second inlet 30 and 32 respectively. The first inlet 30 is in fluid communication with the first component 18.

Also, the second inlet 32 is in fluid communication with the second component 20.

The housing 28 defines a mixing chamber 34 which is in fluid communication with the first inlet 30 and the second inlet 32.

As shown in Fig. 1, the housing 28 defines a bore 36 having a first and a second end 38 and 40 respectively, the bore 36 being in fluid communication with the mixing chamber 34 shown in Fig. 2.

As shown in Fig. 1, a rod 42 has a first and a second extremity 44 and 46 respectively, the rod 42 slidably extending through the bore 36. The arrangement is such that when the rod 42 is disposed in a first axial disposition thereof relative to the bore 36 as shown in Fig. 1, a flow as indicated by the arrow 48 of the activated coating 12 past the first end 38 of the bore 36 is permitted.

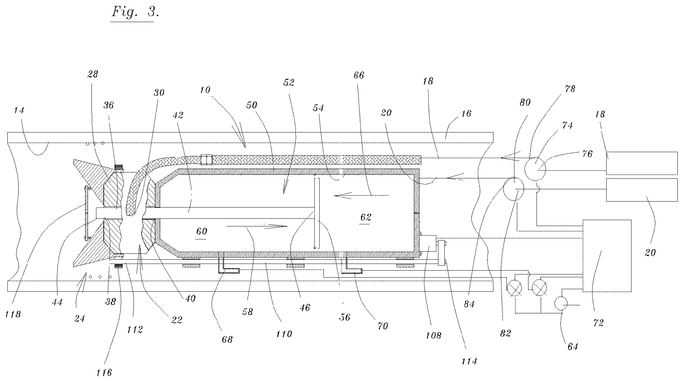

Fig. 3 is a similar view to that shown in Fig. 1 but shows the rod42 disposed in a second axial disposition thereof relative to the bore 36. As shown in Fig. 3, when the rod42 is disposed in the second axial disposition thereof relative to the bore 36 with the rod 42 moved axially to the left, the flow 48 of the activated coating 12 past the first end 38 of the bore 36 is inhibited.

The first extremity 44 of the rod 42 cooperates with the first end 38 of the bore 36 such that when the rod 42 is in the second axial disposition thereof as shown in Fig. 3, the first extremity 44 of the rod 42 seats relative to the first end 38 of the bore 36 for sealing the first end 38 of the bore 36 for preventing the flow 48 of activated coating 12 out of the housing 28.

Also, a body 50 is disposed axially spaced relative to the housing 28, the body 50 defining an enclosure generally designated 52 for the reception therein of the second extremity 46 of the rod 42.

The enclosure 52 has an inner surface 54 of cylindrical configuration.

Additionally, a piston 56 is secured to the second extremity 46 of the rod 42, the piston 56 sealingly cooperating with the inner surface 54 of the enclosure 52. The arrangement is such that axial movement as indicated by the arrow 58 of the piston 56 within the enclosure 52 is permitted.

The enclosure 52 has a first and a second compartment 60 and 62 respectively such that the piston 56 is disposed between the first and the second compartments 60 and 62 respectively.

Also, a source of pressurized fluid such as pressurized air64 is selectively connected to the first compartment 60 for moving the piston 56 and the rod 42 axially within the enclosure 52 as indicated by the arrow 58 such that the first extremity 44 of the rod 42 is disposed in the first disposition thereof as shown in Fig. 1 for permitting the flow 48 of activated coating 12.

Moreover, the source of pressurized fluid64 is selectively connected to the second compartment 62 for moving the piston 56 and the rod 42 axially within the enclosure 52 as indicated by the arrow 66 such that the first extremity 44 of the rod 42 is disposed in the second disposition thereof as shown in Fig. 3 for inhibiting the flow 48 of activated coating 12.

A first connector 68 is connected to the first compartment 60 for connecting the first compartment 60 to the source of pressurized fluid 64.

Also, a second connector 70 is connected to the second compartment 62 for connecting the second compartment 62 to the source of pressurized fluid 64.

A control device 72 is disposed remote from the enclosure 52 for selectively controlling connection of the source of pressurized fluid 64 to the first and the second connectors 68 and 70 respectively for controlling axial movement of the rod 42 between the first and the second dispositions thereof shown in Figs. 1 and 3 respectively.

Furthermore, a first pump 74 is disposed remote from the first inlet 30 of the high-pressure mix gun 22. The first pump 74 has an inlet port 76 and an outlet port 78, the outlet port 78 of the first pump 74 being connected to the first inlet 30 of the high-pressure mix gun 22. The first pump 74 is used to pressurize the first component 18 to a pressure within a range of 10,342,135 Pa to 24,131,625 Pa (1500 to 3500 pound per square inch).

A second pump 80 is disposed remote from the second inlet 32 of the high-pressure mix gun 22 as shown in Fig. 2. The second pump 80 has a further inlet port 82 and a further outlet port 84. The further outlet port 84 of the second pump 80 is connected to the second inlet 32 of the high-pressure mix gun 22 as shown in Fig. 2. The second pump 80 pressurizes the second component 20 to a pressure within a range of 10,342,135 Pa to 24,131,625 Pa (1500 to 3500 pound per square inch).

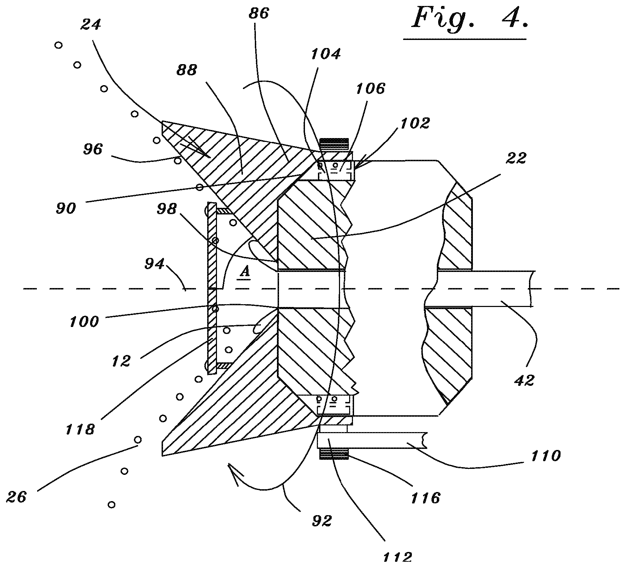

Fig. 4 is an enlarged view of the rotary atomizer 24 shown in Fig. 1. As shown in Fig. 4, the rotary atomizer 24 has a rearward portion generally designated 86 and a forward portion generally designated 88.

The rearward portion 86 of the rotary atomizer 24 defines a recess 90 which cooperates with and is supported by the high-pressure mix gun 22 for permitting rotation as indicated by the arrow 92 of the rotary atomizer 24 relative to the high-pressure mix gun 22 so that the rotary atomizer 24 rotates about a longitudinal axis 94 which extends through the high-pressure mix gun 22.

Moreover, the forward portion 88 of the rotary atomizer 24 defines an inside surface 96 of conical shaped configuration.

The conical shaped configuration of the inside surface 96 of the forward portion 88 has an apex 98 which is disposed in a vicinity of the activated coating 12 generated by the high-pressure mix gun 22. The arrangement is such that the activated coating 12 generated by the high-pressure mix gun 12 flows from the high-pressure mix gun 22 through an aperture 100 defined by the apex 98 of the inside surface 96, so that rotation as indicated by the arrow 92 of the inside surface 96 guides and spreads the activated coating 12 so that the activated coating 12 is applied to the internal surface 14 of the conduit 16 as shown in Fig. 1.

A bearing generally designated 102 is disposed between the recess 90 of the rearward portion 86 of the rotary atomizer 24 and the high-pressure mix gun 22 for facilitating support of the rotary atomizer 24 and rotation thereof about the high-pressure mix gun 22.

More specifically, the bearing 102 includes a first annular row of ball bearings 104. A second annular row of ball bearings 106 is disposed axially spaced relative to the first annular row of ball bearings 104.

As shown in Fig. 3, a motor 108 is drivingly connected to the rotary atomizer 24 for rotating the rotary atomizer 24 about the high-pressure mix gun 22 as indicated by the arrow 92 shown in Fig. 4.

The high-pressure mix gun 22 is disposed between the motor 108 and the rotary atomizer 24.

The apparatus 10 further includes a drive shaft 110 having a first and a second end 112 and 114 respectively, the motor 108 being drivingly connected to the second end 114 of the drive shaft 110.

A drive belt 116 cooperates with the first end 112 of the drive shaft 110 such that the drive belt 116 is driven by the drive shaft 110. The drive belt 116 extends around the rotary atomizer 24 such that the drive belt 116 drivingly cooperates with the rotary atomizer 24 for rotating the same about the high-pressure mix gun 22 as indicated by the arrow 92.

Furthermore, a plate 118 is provided for deflecting the activated coating 12 towards the conical shaped configuration of the inside surface 96 such that the apex 98 is disposed between the plate 118 and the high-pressure mix gun 22.

As shown in Fig. 4, the plate 118 is secured to the forward portion 88 of the rotary atomizer 24 so that activated coating 12 flows from the high-pressure mix gun 22 through the aperture 100 and is deflected and atomized by the plate 118 onto the conical shaped configuration of the inside surface 96of the forward portion 88. The arrangement is such that rotation of the forward portion 88 urges the atomized activated coating 26 to move by centrifugal force and guided by the inside surface 96 for application onto the internal surface 14 of the conduit 16 to be coated.

In operation of the apparatus according to the present invention, the apparatus 10 is inserted into the conduit 16 and the control device 72 is programmed to advance the apparatus 10 through the conduit 16. The control device 72 also actuates both of the pumps 74 and 80 so that high pressure components 18 and 20 are fed towards the mixing chamber 34. The control device 72 selectively connects the source of pressurized fluid such as pressurized air to the first compartment 60 so that the activated coating 12 flows from the mixing chamber 34 to the rotary atomizer 24. The control device 72 also energizes the motor 108 so that the rotary atomizer rotates for applying the atomized activated coating onto the internal surface 14 of the conduit 16. Because the distance between the mixing chamber 34 and the inside surface 96 of the rotary atomizer is very small, the inventor has discovered that surprisingly, there is no need to purge the apparatus after use and that the coating operation can be interrupted if necessary and restarted without any need for the introduction of any solvents or purging equipment for cleaning the apparatus during or after a coating operation.

Additionally, the inside surface 96 is very steep relative to the longitudinal axis 94. More specifically, the angle "A" defined between the inside surface 96 and the longitudinal axis 94 is at least 45 degrees. Because this angle "A" is steep, the residence time of the atomized activated material 26 guided by the inside surface 96 is minimized thus reducing the amount of material 26 that is able to adhere to this inside surface 96 so that there is little or no build up of material 26 on such inside surface 96.

Additionally, the motor 108 rotates the inside surface 96 within a range 3000 to 7000rpm and preferably at 3500rpm.

In another aspect of the present invention, the present invention relates to an apparatus for coating an internal surface of a pipe with coating material. The apparatus includes a coating head defining a conical surface having a first and a second end. The arrangement is such that in use of the apparatus, the conical surface guides the coating material towards the internal surface of the pipe. A motor is selectively connected to an energy source such that when the motor is connected to the energy source, the motor rotates the coating head. The arrangement is such that a ribbon of the coating material flows radially outwardly from the second end of the conical surface towards the internal surface of the pipe. A mixer is disposed upstream relative to the coating head, the mixer defining a high-pressure mixer chamber such that in use of the apparatus, the coating material flows from the high-pressure mixer chamber towards the coating head.

The high-pressure mixer chamber is selectively connected to a supply of a first coating component disposed at a first location adjacent to the high-pressure mixer chamber for selective fluid communication with the high-pressure mixer chamber. Additionally, the high-pressure mixer chamber is selectively connected to a supply of a second coating component disposed at a second location adjacent to the high-pressure mixer chamber for selective fluid communication with the high-pressure mixer chamber.

A control is connected to the mixer for selectively moving the high-pressure mixer chamber between an operative disposition and an inoperative disposition. The arrangement is such that the first and second coating components flow into the high-pressure mixer chamber when the high-pressure mixer chamber is disposed in the operative disposition thereof. Also, the first and second coating components are sealed from the high-pressure mixer chamber when the high-pressure mixer chamber is disposed in the inoperative disposition thereof.

Furthermore, the high-pressure mixer chamber is connected to a source of pressurized air such that pressurized air within the high-pressure mixer chamber mixes the first and second coating components within the high-pressure mixer chamber so that when the high-pressure mixer chamber is in the operative disposition thereof, the coating material flows from the high-pressure mixer chamber to the coating head for application of the coating material to the internal surface of the pipe.

More specifically, the present invention provides a unique apparatus for internally coating pipes including pipes having an inside diameter even less than 2 inches.

Although spin atomizers for applying coating material have been known, they include an internal conical surface which defines a relatively small angle to the axis of rotation of the surface. This angle may be 30 degrees or less and there exists a tendency for the coating material to flow relatively slowly along the conical surface from the first to the downstream second end of the conical surface. Because of this slow movement of the coating material in the known coaters, the coating material tends to build up in thickness on the conical surface. Such build-up of coating material causes a problem during a coating operation and after the coating operation has been terminated. First, during coating, there is a tendency for radial bores circumferentially spaced and defined by the conical surface to clog up. Also, the provision of these bores in the known coaters tend to spatter the coating material towards the surface to be coated.

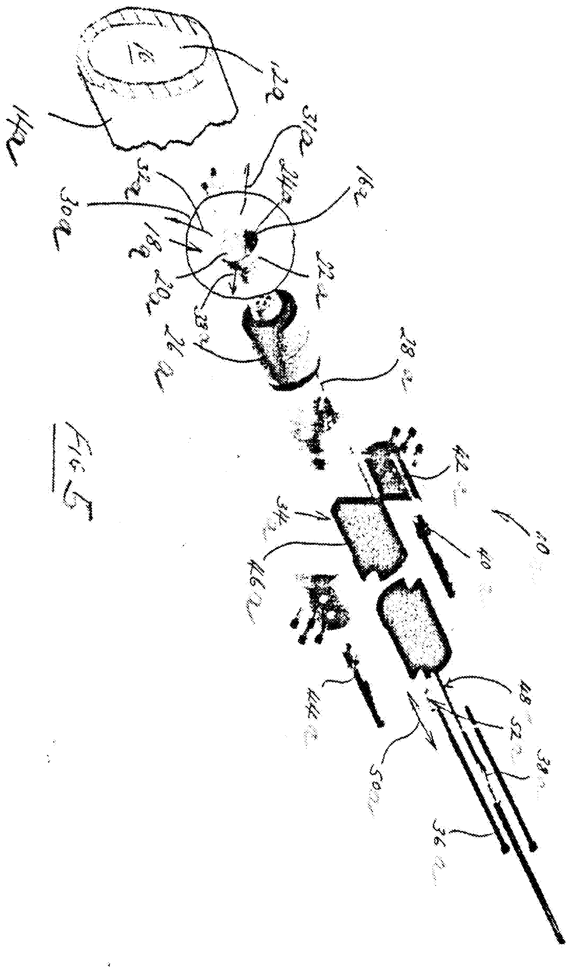

However, in the present invention, the conical surface is disposed at a relatively large angle relative to the axis of rotation of the conical surface. For example the angle may be 45 degrees or more. This results in a rapid flow of coating material along the conical surface. Also, a baffle is disposed adjacent to the upstream or first end of the conical surface so that coating material flowing from the high pressure mixing chamber impinges the baffle and is deflected and atomized by the baffle onto and towards the first end of the conical surface where the coating material rapidly flows towards the second or downstream end of the conical surface. In the further embodiment of the present invention as shown in Figs. 5 to 7 and the earlier described embodiments shown in Figs. 1 to 4, there are no radial bores defined by the conical surface. Rather, the coating material flows in a thin conical layer to the second or downstream end of the conical surface where the coating material tends to form a thin radially extending ribbon of coating material which flows in a radial curtain or ribbon almost normal to the axis of rotation of the conical surface. Such radial curtain tends to strike the internal surface of the pipe in a radial direction substantially normal to the axis of rotation of the conical surface. Of course, the forward momentum of the apparatus will also to a degree have a bearing on the angle of attack of the coating material onto the internal surface of the pipe. However, clearly it is desirable that the ribbon of coating material strike the internal pipe surface substantially normal to the axis of rotation as this will minimize any tendency for the coating material to bounce off the internal surface of the pipe or ricochet therefrom. In the apparatus according to the present invention, very smooth and thin coatings of uniform thickness have been consistently applied. Accordingly, this has resulted in a reduction in the amount of materials used in the coating operation. Additionally, because the mixing chamber is immediately sealed from the supply in the inoperative disposition thereof, the pressurized air easily disperses the minute amount of coating material remaining downstream from the mixer. Also, the thin film of coating material on the conical surface is minimal requiring no clean up or solvents after completion of the coating operation. The conical surface spins at about 5000rpm so the buildup on the conical surface is negligible.

More specifically, Fig. 5 is an exploded perspective view of the further embodiment of the present invention. As shown in Fig. 5, the apparatus generally designated 10a according to the present invention is for coating an internal surface 12a of a pipe 14a with coating material 16a. As shown in Fig. 5, the apparatus 10a includes a coating head generally designated 18a defining a conical surface 20a having a first and a second end 22a and 24a respectively. The arrangement is such that in use of the apparatus 10a, the conical surface 20a guides the coating material 16a towards the internal surface 12a of the pipe 14a. A motor 26a is selectively connected to an energy source 28a such that when the motor 26a is connected to the energy source 28a, the motor 26a rotates the coating head 18a. The arrangement is such that a ribbon 30a of the coating material 16a flows radially outwardly as indicated by the arrows 31a, 32a and 33a from the second end 24a of the conical surface 20a towards the internal surface 12a of the pipe 14a. A mixer generally designated 34a is disposed upstream relative to the coating head 18a, the mixer 34a defining a high-pressure mixer chamber 36a such that in use of the apparatus 10a, the coating material 16 flows as indicated by the arrow 38a from the high-pressure mixer chamber 36a towards the coating head 18a.

The high-pressure mixer chamber 36a is selectively connected to a supply of a first coating component 40a disposed at a first location 42a adjacent to the high-pressure mixer chamber 36a for selective fluid communication with the high-pressure mixer chamber 36a. Additionally, the high-pressure mixer chamber 36a is selectively connected to a supply of a second coating component 44a disposed at a second location 46a adjacent to the high-pressure mixer chamber 36a for selective fluid communication with the high-pressure mixer chamber 36a.

A control generally designated 48a is connected to the mixer 34a for selectively moving the high-pressure mixer chamber 36a between an operative disposition and an inoperative disposition as indicated by the arrow 50a. The arrangement is such that the first and second coating components flow into the high-pressure mixer chamber 36a when the high-pressure mixer chamber 36a is disposed in the operative disposition thereof. Also, the first and second coating components are sealed from the high-pressure mixer chamber 36a when the high-pressure mixer chamber 36a is disposed in the inoperative disposition thereof.

Furthermore, the high-pressure mixer chamber 36a is connected to a source of pressurized air generally designated 52a such that pressurized air within the high-pressure mixer chamber 36a mixes the first and second coating components within the high-pressure mixer chamber 36a so that when the high-pressure mixer chamber 36a is in the operative disposition thereof, the coating material 16a flows from the high-pressure mixer chamber 36a to the coating head 18a for application of the coating material 16a to the internal surface 12a of the pipe 14a.

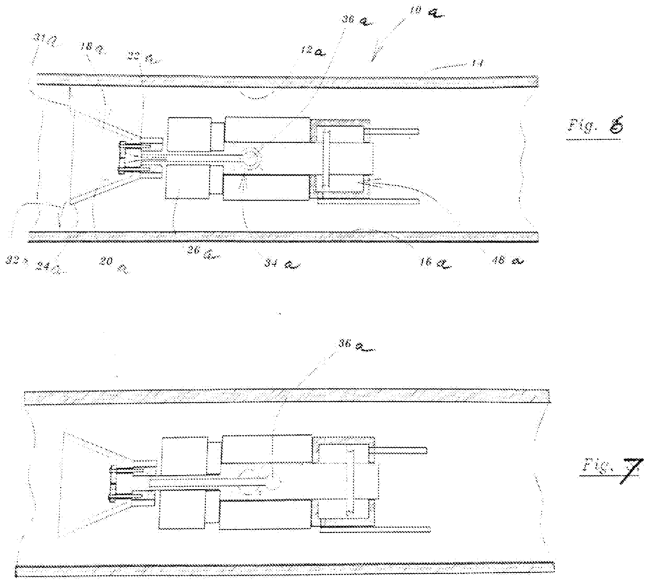

Fig.6 is a side elevational view partially in section of the apparatus 10a shown in Fig. 5. Fig. 6 shows the apparatus in the operative disposition thereof.

Fig. 7 is a similar view to that shown in Fig. 6 but shows the apparatus 10a in an inoperative disposition thereof.

The present invention provides a unique apparatus that permits the application of activated coating to the inside surface of a very small internal diameter pipe and without any need for purging activated coating from the apparatus during any interruption of the coating operation or after completion of the coating operation.

## Claims

1. A coating apparatus (10) for applying an activated coating (12) onto an internal surface (14) of a conduit (16), the activated coating (12) being activated by mixing at least a first component (18) and a second component (20), said apparatus (10) **characterised by** a high-pressure mix gun for mixing the at least first and second components (18, 20) such that the activated coating (12) is generated;
said high-pressure mix gun (22) including: a housing (28) defining a first inlet (30) and a second inlet (32), the first inlet (30) is in fluid communication with the first component (18) and the second inlet (32) is in fluid communication with the second component (20), the housing (28) further defines a bore (36) having a first end (38) and a second end (40), the bore (36) being in fluid communication with a mixing chamber (34), said mixing chamber (34) being in fluid communication with said first inlet (30) and said second inlet (32);
a rod (42) having a first extremity (44) and a second extremity (46), said rod (42) slidably extending through said bore (36), the housing (28) defining the mixing chamber (34) for mixing together the at least first and second components (18, 20),
said rod (42) being controllably movable axially along said bore (36) so that said rod (42) is controllably moved between a first disposition and a second disposition, said rod (42) when disposed in said first disposition thereof permitting said flow (48) of the activated coating (12) past said first end (38) of said bore (36), and when said rod (42) is disposed in a second disposition thereof said flow (48) of the activated coating (12) past said first end (38) of said bore (36) is inhibited,
a rotary atomizer (24) operatively connected to and cooperating with said high pressure mix gun (22) for receiving the activated coating (12) from said high pressure mix gun (22);
a forward portion (88) of said rotary atomizer (24) defining an inside surface (96) of conical shaped configuration operatively disposed relative to said high pressure mix gun (22),
said conical shaped configuration of said inside surface (96) having an apex (98) which is disposed in a vicinity of the activated coating (12) generated by said high-pressure mix gun (22) such that the activated coating (12) generated by said high-pressure mix gun (22) flows from said high-pressure mix gun (22) through an aperture (100) defined by said apex (98) of said inside surface (96),
such that when said rod (42) is disposed in said first disposition thereof, said inside surface (96) of conical shaped configuration receives the activated coating (12) from said high pressure mix gun (22) so that said flow (48) of the activated coating (12) flows from said high pressure mix gun (22) along said inside surface (96) of said conical shaped configuration, and
rotation of said inside surface (96) guides and spreads said activated coating (12) such that the activated coating (12) is applied to the internal surface (14) of the conduit (16).

2. A coating apparatus (10) as set forth in claim1 further **characterised in that** said first extremity (44) of said rod (42) cooperates with said first end (38) of said bore (36) such that when said rod (42) is in said second axial disposition thereof, said first extremity (44) of said rod (42) seats relative to said first end (38) of said bore (36) for sealing said first end (38) of said bore (36) for preventing said flow (48) of activated coating (12) out of said housing (28).

3. A coating apparatus (10) as set forth in claim 1 further **characterised in that** the coating apparatus (10) further comprises:
a body (50) disposed axially spaced relative to said housing (28), said body (50) defining an enclosure (52) for the reception therein of said second extremity (46) of said rod (42);
said enclosure (52) having an inner surface (54) of cylindrical configuration;
a piston (56) secured to said second extremity (46) of said rod (42), said piston (56) sealingly cooperating with said inner surface (54) of said enclosure (52) such that axial movement of said piston (56) within said enclosure (52) is permitted.

4. A coating apparatus (10) as set forth in claim 3 further **characterised in that** said enclosure (52) has a first and a second compartment (60, 62) such that said piston (56) is disposed between said first and a second compartments (60, 62);
a source of pressurized fluid (64) being selectively connected to said first compartment (60) for moving said piston (56) and said rod (42) axially within said enclosure (52) such that said first extremity (44) of said rod (42) is disposed in said first disposition thereof for permitting said flow (48) of activated coating (12);
said source of pressurized fluid (64) being selectively connected to said second compartment (62) for moving said piston (56) and said rod (42) axially within said enclosure (52) such that said first extremity (44) of said rod (42) is disposed in said second disposition thereof for inhibiting said flow (48) of activated coating (12).

5. A coating apparatus (10) as set forth in claim 4 further **characterised in that** the coating apparatus (10) comprises:
a first connector (68) connected to said first compartment (60) for connecting said first compartment (60) to said source of pressurized fluid (64);
a second connector (70) connected to said second compartment (62) for connecting said second compartment (62) to said source of pressurized fluid (64);
a control device (72) disposed remote from said enclosure (52) for selectively controlling connection of said source of pressurized fluid (64) to said first and said second connectors for controlling axial movement of said rod (42) between said first and said second dispositions thereof.

6. A coating apparatus (10) as set forth in claim 1 further **characterised in that** the coating apparatus (10) further comprises:
a first pump (74) disposed remote from said first inlet of (30) said high-pressure mix gun (22), said first pump (74) having an inlet port (76) and an outlet port (78), said outlet port (78) of said first pump (74) being connected to said first inlet (30) of said high-pressure mix gun (22), said first pump (74) pressurizing the first component (18) to a pressure within a range of 10,342,135 Pa to 24,131,625 Pa (1500 to 3500 pound per square inch);
a second pump (80) disposed remote from said second inlet (32) of said high-pressure mix gun (22), said second pump (80) having a further inlet port (82) and a further outlet port (84), said further outlet port (84) of said second pump (80) being connected to said second inlet (32) of said high-pressure mix gun (22), said second pump (80) pressurizing the second component (20) to a pressure within a range of 10,342,135 Pa to 24,131,625 Pa (1500 to 3500 pound per square inch).

7. A coating apparatus (10) as set forth in claim 1 further **characterised in that**
said rotary atomizer (24) has a rearward portion (86) and a forward portion (88);
said rearward portion (86) of said rotary atomizer (24) defines a recess (90) which cooperates with and is supported by said high-pressure mix gun (22) for permitting rotation of said rotary atomizer (24) relative to said high-pressure mix gun (22), said rotary atomizer (24) rotating about a longitudinal axis which extends through said high-pressure mix gun (22).

8. A coating apparatus (10) as set forth in claim 7 further **characterised in that** the coating apparatus (10) further comprises:
a bearing (102) disposed between said recess of said rearward portion of said rotary atomizer (24) and said high-pressure mix gun (22) facilitating support of said rotary atomizer (24) and rotation thereof about said high-pressure mix gun (22).

9. A coating apparatus (10) as set forth in claim 8 further **characterised in that** said bearing (102) includes:
a first annular row of ball bearings (104);
a second annular row of ball bearings (106) disposed axially spaced relative to said first annular row of ball bearings (104).

10. A coating apparatus (10) as set forth in claim 1 further **characterised in that** the coating apparatus (10) further comprises:
a motor (108) drivingly connected to said rotary atomizer (24) for rotating said rotary atomizer (24) about said high-pressure mix gun (22).

11. A coating apparatus (10) as set forth in claim 10 further **characterised in that** said high-pressure mix gun (22) is disposed between said motor and said rotary atomizer (24); said apparatus (10) further including:
a drive shaft (110) having a first and a second end (112, 114), said motor (108) being drivingly connected to said second end (114) of said drive shaft (110);
a drive belt (116) cooperating with said first end (112) of said drive shaft (110) such that said drive belt (116) is driven by said drive shaft (110), said drive belt (116) extending around said rotary atomizer (24) such that said drive belt (116) drivingly cooperates with said rotary atomizer (24) for rotating the same about said high-pressure mix gun (22).

12. A coating apparatus (10) as set forth in claim 7 further **characterised in that** the coating apparatus (10) further comprises:
a plate (118) for deflecting the activated coating (12) towards said conical shaped configuration of said inside surface (96) such that said apex (98) is disposed between said plate (118) and said high-pressure mix gun (22).

13. A coating apparatus (10) as set forth in claim 12 further **characterised in that** said plate (118) is secured to said forward portion (88) of said rotary atomizer (24) so that activated coating (12) flows from said high-pressure mix gun (22) through said aperture and is deflected and atomized by said plate (118) onto said conical shaped configuration of said inside surface (96) of said forward portion (88) and so that rotation of said forward portion (88) urges said atomized activated coating (12) to move by centrifugal force and guided by said inside surface (96) for application onto the internal surface (14) of the conduit (16) to be coated.

## Patentansprüche

1. Beschichtungsvorrichtung (10) zum Auftragen einer aktivierten Beschichtung (12) auf eine interne Fläche (14) einer Leitung (16), wobei die aktivierte Beschichtung (12) durch Mischen mindestens einer ersten Komponente (18) und einer zweiten Komponente (20) aktiviert wird, wobei die Vorrichtung (10) durch Folgendes gekennzeichnet ist
eine Hochdruckmischpistole zum Mischen der mindestens ersten und zweiten Komponenten (18, 20), derart, dass die aktivierte Beschichtung (12) erzeugt wird;
wobei die Hochdruckmischpistole (22) Folgendes beinhaltet: ein Gehäuse (28), das einen ersten Einlass (30) und einen zweiten Einlass (32) definiert, wobei der erste Einlass (30) in Fluidkommunikation mit der ersten Komponente (18) steht und der zweite Einlass (32) in Fluidkommunikation mit der zweiten Komponente (20) steht, wobei das Gehäuse (28) ferner eine Bohrung (36) mit einem ersten Ende (38) und einem zweiten Ende (40) definiert, wobei die Bohrung (36) in Fluidkommunikation mit einer Mischkammer (34) steht, wobei die Mischkammer (34) in Fluidkommunikation mit dem ersten Einlass (30) und dem zweiten Einlass (32) steht;
eine Stange (42) mit einem ersten Rand (44) und einem zweiten Rand (46), wobei sich die Stange (42) verschiebbar durch die Bohrung (36) erstreckt, wobei das Gehäuse (28) die Mischkammer (34) definiert, um die mindestens erste und zweite Komponente (18, 20) miteinander zu mischen,
wobei die Stange (42) steuerbar axial entlang der Bohrung (36) bewegbar ist, so dass die Stange (42) steuerbar zwischen einer ersten Anordnung und einer zweiten Anordnung bewegt wird, wobei die Stange (42), wenn sie in der ersten Anordnung davon angeordnet ist, das Fließen (48) der aktivierten Beschichtung (12) an dem ersten Ende (38) der Bohrung (36) vorbei ermöglicht, und wenn die Stange (42) in einer zweiten Anordnung davon angeordnet ist, das Fließen (48) der aktivierten Beschichtung (12) an dem ersten Ende (38) der Bohrung (36) vorbei verhindert wird,
einen Rotationszerstäuber (24), der mit der Hochdruckmischpistole (22) wirkverbunden ist und mit dieser zusammenwirkt, um die aktivierte Beschichtung (12) von der Hochdruckmischpistole (22) aufzunehmen;
einen vorderen Abschnitt (88) des Rotationszerstäubers (24), der eine Innenfläche (96) mit konisch geformter Konfiguration definiert, die betriebsmäßig relativ zu der Hochdruckmischpistole (22) angeordnet ist,
wobei die konisch geformte Konfiguration der Innenfläche (96) eine Spitze (98) aufweist, die in der Nähe der aktivierten Beschichtung (12) angeordnet ist, die durch die Hochdruckmischpistole (22) erzeugt wird, derart, dass die aktivierte Beschichtung (12), die durch die Hochdruckmischpistole (22) erzeugt wird, von der Hochdruckmischpistole (22) durch eine Öffnung (100), die durch die Spitze (98) der Innenfläche (96) definiert ist, fließt,
so dass, wenn die Stange (42) in der ersten Anordnung davon angeordnet ist, die Innenfläche (96) mit konisch geformter Konfiguration die aktivierte Beschichtung (12) von der Hochdruckmischpistole (22) aufnimmt, so dass das Fließen (48) der aktivierten Beschichtung (12) von der Hochdruckmischpistole (22) entlang der Innenfläche (96) mit konisch geformter Konfiguration fließt, und
eine Drehung der Innenfläche (96) die aktivierte Beschichtung (12) führt und verteilt, derart, dass die aktivierte Beschichtung (12) auf die interne Fläche (14) der Leitung (16) aufgetragen wird.

2. Beschichtungsvorrichtung (10) nach Anspruch 1, ferner **dadurch gekennzeichnet, dass**
der erste Rand (44) der Stange (42) mit dem ersten Ende (38) der Bohrung (36) zusammenwirkt, derart, dass, wenn sich die Stange (42) in der zweiten axialen Anordnung davon befindet, der erste Rand (44) der Stange (42) relativ zu dem ersten Ende (38) der Bohrung (36) sitzt, um das erste Ende (38) der Bohrung (36) abzudichten, um das Fließen (48) der aktivierten Beschichtung (12) aus dem Gehäuse (28) heraus zu verhindern.

3. Beschichtungsvorrichtung (10) nach Anspruch 1, ferner **dadurch gekennzeichnet, dass** die Beschichtungsvorrichtung (10) ferner Folgendes umfasst:
einen Körper (50), der axial beabstandet relativ zu dem Gehäuse (28) angeordnet ist, wobei der Körper (50) eine Hülle (52) definiert, um darin den zweiten Rand (46) der Stange (42) aufzunehmen;
wobei die Hülle (52) eine interne Fläche (54) mit zylindrischer Konfiguration aufweist;
einen Kolben (56), der an dem zweiten Rand (46) der Stange (42) befestigt ist, wobei der Kolben (56) abdichtend mit der internen Fläche (54) der Hülle (52) zusammenwirkt, derart, dass eine axiale Bewegung des Kolbens (56) innerhalb der Hülle (52) ermöglicht wird.

4. Beschichtungsvorrichtung (10) nach Anspruch 3, ferner **dadurch gekennzeichnet, dass**
die Hülle (52) ein erstes und ein zweites Fach (60, 62) aufweist, derart, dass der Kolben (56) zwischen dem ersten und einem zweiten Fach (60, 62) angeordnet ist;
eine Quelle für unter Druck stehendes Fluid (64) selektiv mit dem ersten Fach (60) verbunden ist, um den Kolben (56) und die Stange (42) axial innerhalb der Hülle (52) zu bewegen, derart, dass der erste Rand (44) der Stange (42) in der ersten Anordnung davon angeordnet ist, um das Fließen (48) der aktivierten Beschichtung (12) zu ermöglichen;
die Quelle für unter Druck stehendes Fluid (64) selektiv mit dem zweiten Fach (62) verbunden ist, um den Kolben (56) und die Stange (42) axial innerhalb der Hülle (52) zu bewegen, derart, dass der erste Rand (44) der Stange (42) in der zweiten Anordnung davon angeordnet ist, um den Fluss (48) der aktivierten Beschichtung (12) zu verhindern.

5. Beschichtungsvorrichtung (10) nach Anspruch 4, ferner **dadurch gekennzeichnet, dass** die Beschichtungsvorrichtung (10) Folgendes umfasst:
einen ersten Verbinder (68), der mit dem ersten Fach (60) verbunden ist, um das erste Fach (60) mit der Quelle für unter Druck stehendes Fluid (64) zu verbinden;
einen zweiten Verbinder (70), der mit dem zweiten Fach (62) verbunden ist, um das zweite Fach (62) mit der Quelle für unter Druck stehendes Fluid (64) zu verbinden;
eine Steuervorrichtung (72), die entfernt von der Hülle (52) angeordnet ist, um selektiv die Verbindung der Quelle für unter Druck stehendes Fluid (64) mit dem ersten und dem zweiten Verbinder zu steuern, um eine axiale Bewegung der Stange (42) zwischen der ersten und der zweiten Anordnung davon zu steuern.

6. Beschichtungsvorrichtung (10) nach Anspruch 1, ferner **dadurch gekennzeichnet, dass** die Beschichtungsvorrichtung (10) ferner Folgendes umfasst:
eine erste Pumpe (74), die entfernt von dem ersten Einlass (30) der Hochdruckmischpistole (22) angeordnet ist, wobei die erste Pumpe (74) einen Einlassanschluss (76) und einen Auslassanschluss (78) aufweist, wobei der Auslassanschluss (78) der ersten Pumpe (74) mit dem ersten Einlass (30) der Hochdruckmischpistole (22) verbunden ist, wobei die erste Pumpe (74) die erste Komponente (18) auf einen Druck innerhalb eines Bereichs von 10.342.135 Pa bis 24.131.625 Pa (1.500 bis 3.500 Pfund pro Quadratzoll) unter Druck setzt;
eine zweite Pumpe (80), die entfernt von dem zweiten Einlass (32) der Hochdruckmischpistole (22) angeordnet ist, wobei die zweite Pumpe (80) einen weiteren Einlassanschluss (82) und einen weiteren Auslassanschluss (84) aufweist, wobei der weitere Auslassanschluss (84) der zweiten Pumpe (80) mit dem zweiten Einlass (32) der Hochdruckmischpistole (22) verbunden ist, wobei die zweite Pumpe (80) die zweite Komponente (20) auf einen Druck innerhalb eines Bereichs von 10,342,135 Pa bis 24,131,625 Pa (1500 bis 3500 Pfund pro Quadratzoll) unter Druck setzt.

7. Beschichtungsvorrichtung (10) nach Anspruch 1, ferner **dadurch gekennzeichnet, dass**
der Rotationszerstäuber (24) einen hinteren Abschnitt (86) und einen vorderen Abschnitt (88) aufweist;
wobei der hintere Abschnitt (86) des Rotationszerstäubers (24) eine Ausnehmung (90) definiert, die mit der Hochdruckmischpistole (22) zusammenwirkt und von dieser gestützt wird, um eine Drehung des Rotationszerstäubers (24) relativ zu der Hochdruckmischpistole (22) zu ermöglichen, wobei sich der Rotationszerstäuber (24) um eine Längsachse dreht, die sich durch die Hochdruckmischpistole (22) erstreckt.

8. Beschichtungsvorrichtung (10) nach Anspruch 7, ferner **dadurch gekennzeichnet, dass** die Beschichtungsvorrichtung (10) ferner Folgendes umfasst:
ein Lager (102), das zwischen der Ausnehmung des hinteren Abschnitts des Rotationszerstäubers (24) und der Hochdruckmischpistole (22) angeordnet ist, wobei die Unterstützung des Rotationszerstäubers (24) und die Drehung davon um die Hochdruckmischpistole (22) erleichtert wird.

9. Beschichtungsvorrichtung (10) nach Anspruch 8, ferner **dadurch gekennzeichnet, dass**
das Lager (102) Folgendes beinhaltet:
eine erste ringförmige Reihe von Kugellagern (104);
eine zweite ringförmige Reihe von Kugellagern (106), die axial beabstandet relativ zu der ersten ringförmigen Reihe von Kugellagern (104) angeordnet ist.

10. Beschichtungsvorrichtung (10) nach Anspruch 1, ferner **dadurch gekennzeichnet, dass** die Beschichtungsvorrichtung (10) ferner Folgendes umfasst:
einen Motor (108), der mit dem Rotationszerstäuber (24) antriebsmäßig verbunden ist, um den Rotationszerstäuber (24) um die Hochdruckmischpistole (22) zu drehen.

11. Beschichtungsvorrichtung (10) nach Anspruch 10, ferner **dadurch gekennzeichnet, dass**
die Hochdruckmischpistole (22) zwischen dem Motor und dem Rotationszerstäuber (24) angeordnet ist;
wobei die Vorrichtung (10) ferner Folgendes beinhaltet:
eine Antriebswelle (110) mit einem ersten und einem zweiten Ende (112, 114), wobei der Motor (108) antriebsmäßig mit dem zweiten Ende (114) der Antriebswelle (110) verbunden ist;
einen Antriebsriemen (116), der mit dem ersten Ende (112) der Antriebswelle (110) zusammenwirkt, derart, dass der Antriebsriemen (116) von der Antriebswelle (110) angetrieben wird, wobei sich der Antriebsriemen (116) um den Rotationszerstäuber (24) erstreckt, derart, dass der Antriebsriemen (116) mit dem Rotationszerstäuber (24) antriebsmäßig zusammenwirkt, um diesen um die Hochdruckmischpistole (22) zu drehen.

12. Beschichtungsvorrichtung (10) nach Anspruch 7, ferner **dadurch gekennzeichnet, dass** die Beschichtungsvorrichtung (10) ferner Folgendes umfasst:
eine Platte (118) zum Ablenken der aktivierten Beschichtung (12) in Richtung der konisch geformten Konfiguration der Innenfläche (96), derart, dass die Spitze (98) zwischen der Platte (118) und der Hochdruckmischpistole (22) angeordnet ist.

13. Beschichtungsvorrichtung (10) nach Anspruch 12, ferner **dadurch gekennzeichnet, dass**
die Platte (118) an dem vorderen Abschnitt (88) des Rotationszerstäubers (24) befestigt ist, so dass die aktivierte Beschichtung (12) von der Hochdruckmischpistole (22) durch die Öffnung fließt und durch die Platte (118) auf die konisch geformte Konfiguration der Innenfläche (96) des vorderen Abschnitts (88) abgelenkt und zerstäubt wird, und so dass eine Drehung des vorderen Abschnitts (88) die zerstäubte aktivierte Beschichtung (12) dazu zwingt, sich durch Zentrifugalkraft und geführt durch die Innenfläche (96) zum Auftragen auf die interne Fläche (14) der zu beschichtenden Leitung (16) zu bewegen.

## Revendications

1. Appareil de revêtement (10) pour appliquer un revêtement activé (12) sur une surface interne (14) d'un conduit (16), le revêtement activé (12) étant activé par le mélange d'au moins un premier composant (18) et d'un deuxième composant (20), ledit appareil (10) étant **caractérisé par**
un pistolet mélangeur à haute pression pour mélanger les au moins premier et deuxième composants (18, 20) de sorte que le revêtement activé (12) soit généré ;
ledit pistolet mélangeur à haute pression (22) comprenant : un boîtier (28) définissant une première entrée (30) et une seconde entrée (32), la première entrée (30) est en communication fluidique avec le premier composant (18) et la seconde entrée (32) est en communication fluidique avec le deuxième composant (20), le boîtier (28) définit en outre un alésage (36) ayant une première extrémité (38) et une seconde extrémité (40), l'alésage (36) étant en communication fluidique avec une chambre de mélange (34), ladite chambre de mélange (34) étant en communication fluidique avec ladite première entrée (30) et ladite seconde entrée (32) ;
une tige (42) ayant une première extrémité (44) et une seconde extrémité (46), ladite tige (42) s'étendant de manière coulissante à travers ledit alésage (36), le boîtier (28) définissant la chambre de mélange (34) pour mélanger les au moins premier et deuxième composants (18, 20) l'un à l'autre,
ladite tige (42) étant déplaçable axialement de manière contrôlable le long dudit alésage (36) de sorte que ladite tige (42) soit déplacée de manière contrôlable entre une première disposition et une seconde disposition, ladite tige (42) lorsqu'elle est disposée dans ladite première disposition de celle-ci permettant ledit écoulement (48) du revêtement activé (12) au-delà de ladite première extrémité (38) dudit alésage (36), et lorsque ladite tige (42) est disposée dans une seconde disposition de celle-ci, ledit écoulement (48) du revêtement activé (12) au-delà de ladite première extrémité (38) dudit alésage (36) est inhibé,
un atomiseur rotatif (24) raccordé de manière opérationnelle et coopérant avec ledit pistolet mélangeur à haute pression (22) pour recevoir le revêtement activé (12) dudit pistolet mélangeur à haute pression (22) ;
une partie avant (88) dudit atomiseur rotatif (24) définissant une surface intérieure (96) de configuration de forme conique disposée de manière opérationnelle par rapport audit pistolet mélangeur à haute pression (22),
ladite configuration de forme conique de ladite surface intérieure (96) ayant un sommet (98) qui est disposé à proximité du revêtement activé (12) généré par ledit pistolet mélangeur à haute pression (22) de sorte que le revêtement activé (12) généré par ledit pistolet mélangeur à haute pression (22) s'écoule dudit pistolet mélangeur à haute pression (22) à travers une ouverture (100) définie par ledit sommet (98) de ladite surface intérieure (96),
de sorte que lorsque ladite tige (42) est disposée dans ladite première disposition de celle-ci, ladite surface intérieure (96) de configuration de forme conique reçoive le revêtement activé (12) dudit pistolet mélangeur à haute pression (22) si bien que ledit écoulement (48) du revêtement activé (12) s'écoule dudit pistolet mélangeur à haute pression (22) le long de ladite surface intérieure (96) de ladite configuration de forme conique, et
la rotation de ladite surface intérieure (96) guide et étale ledit revêtement activé (12) de sorte que le revêtement activé (12) soit appliqué sur la surface interne (14) du conduit (16).

2. Appareil de revêtement (10) selon la revendication 1, **caractérisé en outre en ce que** ladite première extrémité (44) de ladite tige (42) coopère avec ladite première extrémité (38) dudit alésage (36) de sorte que lorsque ladite tige (42) est dans ladite seconde disposition axiale de celle-ci, ladite première extrémité (44) de ladite tige (42) repose par rapport à ladite première extrémité (38) dudit alésage (36) afin de sceller ladite première extrémité (38) dudit alésage (36) et d'empêcher ledit écoulement (48) du revêtement activé (12) hors dudit boîtier (28).

3. Appareil de revêtement (10) selon la revendication 1, **caractérisé en outre en ce que** l'appareil de revêtement (10) comprend en outre :
un corps (50) disposé axialement espacé par rapport audit boîtier (28), ledit corps (50) définissant une enceinte (52) pour la réception dans celle-ci de ladite seconde extrémité (46) de ladite tige (42) ;
ladite enceinte (52) ayant une surface interne (54) de configuration cylindrique ;
un piston (56) fixé à ladite seconde extrémité (46) de ladite tige (42), ledit piston (56) coopérant de manière étanche avec ladite surface interne (54) de ladite enceinte (52) de sorte que le mouvement axial dudit piston (56) à l'intérieur de ladite enceinte (52) soit autorisé.

4. Appareil de revêtement (10) selon la revendication 3, **caractérisé en outre en ce que**
ladite enceinte (52) a un premier et un second compartiments (60, 62) de sorte que ledit piston (56) soit disposé entre lesdits premier et second compartiments (60, 62) ;
une source de fluide sous pression (64) étant sélectivement raccordée audit premier compartiment (60) pour déplacer ledit piston (56) et ladite tige (42) axialement à l'intérieur de ladite enceinte (52) de sorte que ladite première extrémité (44) de ladite tige (42) soit disposée dans ladite première disposition de celle-ci pour permettre ledit écoulement (48) du revêtement activé (12) ;
ladite source de fluide sous pression (64) étant sélectivement raccordée audit second compartiment (62) pour déplacer ledit piston (56) et ladite tige (42) axialement à l'intérieur de ladite enceinte (52) de sorte que ladite première extrémité (44) de ladite tige (42) soit disposée dans ladite seconde disposition de celle-ci pour inhiber ledit écoulement (48) du revêtement activé (12).

5. Appareil de revêtement (10) selon la revendication 4, **caractérisé en outre en ce que** l'appareil de revêtement (10) comprend :
un premier raccord (68) raccordé audit premier compartiment (60) pour raccorder ledit premier compartiment (60) à ladite source de fluide sous pression (64) ;
un second raccord (70) raccordé audit second compartiment (62) pour raccorder ledit second compartiment (62) à ladite source de fluide sous pression (64) ;
un dispositif de commande (72) disposé à distance de ladite enceinte (52) pour commander sélectivement le raccordement de ladite source de fluide sous pression (64) auxdits premier et second raccords pour commander le déplacement axial de ladite tige (42) entre lesdites première et seconde dispositions de celle-ci.

6. Appareil de revêtement (10) selon la revendication 1, **caractérisé en outre en ce que** l'appareil de revêtement (10) comprend en outre :
une première pompe (74) disposée à distance de ladite première entrée (30) dudit pistolet mélangeur à haute pression (22), ladite première pompe (74) ayant un orifice d'entrée (76) et un orifice de sortie (78), ledit orifice de sortie (78) de ladite première pompe (74) étant raccordé à ladite première entrée (30) dudit pistolet mélangeur à haute pression (22), ladite première pompe (74) pressurisant le premier composant (18) à une pression comprise dans la plage de 10 342 135 Pa à 24 131 625 Pa (1 500 à 3 500 livres par pouce carré) ;
une seconde pompe (80) disposée à distance de ladite seconde entrée (32) dudit pistolet mélangeur à haute pression (22), ladite seconde pompe (80) ayant un autre orifice d'entrée (82) et un autre orifice de sortie (84), ledit autre orifice de sortie (84) de ladite seconde pompe (80) étant raccordé à ladite seconde entrée (32) dudit pistolet mélangeur à haute pression (22), ladite seconde pompe (80) pressurisant le second composant (20) à une pression comprise dans la plage de 10 342 135 Pa à 24 131 625 Pa (1 500 à 3 500 livres par pouce carré).

7. Appareil de revêtement (10) selon la revendication 1, **caractérisé en outre en ce que**
ledit atomiseur rotatif (24) a une partie arrière (86) et une partie avant (88) ;
ladite partie arrière (86) dudit atomiseur rotatif (24) définit un évidement (90) qui coopère avec et est supporté par ledit pistolet mélangeur à haute pression (22) pour permettre la rotation dudit atomiseur rotatif (24) par rapport audit pistolet mélangeur à haute pression (22), ledit atomiseur rotatif (24) tournant autour d'un axe longitudinal qui s'étend à travers ledit pistolet mélangeur à haute pression (22).

8. Appareil de revêtement (10) selon la revendication 7, **caractérisé en outre en ce que** l'appareil de revêtement (10) comprend en outre :
un palier (102) disposé entre ledit évidement de ladite partie arrière dudit atomiseur rotatif (24) et ledit pistolet mélangeur à haute pression (22) facilitant le support dudit atomiseur rotatif (24) et sa rotation autour dudit pistolet mélangeur à haute pression (22).

9. Appareil de revêtement (10) selon la revendication 8, **caractérisé en outre en ce que** ledit palier (102) comprend :
une première rangée annulaire de roulements à billes (104) ;
une seconde rangée annulaire de roulements à billes (106) disposés axialement espacés par rapport à ladite première rangée annulaire de roulements à billes (104).

10. Appareil de revêtement (10) selon la revendication 1, **caractérisé en outre en ce que** l'appareil de revêtement (10) comprend en outre :
un moteur (108) raccordé en entraînement audit atomiseur rotatif (24) pour faire tourner ledit atomiseur rotatif (24) autour dudit pistolet mélangeur à haute pression (22).

11. Appareil de revêtement (10) selon la revendication 10, **caractérisé en outre en ce que** ledit pistolet mélangeur à haute pression (22) est disposé entre ledit moteur et ledit atomiseur rotatif (24) ;
ledit appareil (10) comprenant en outre :
un arbre d'entraînement (110) possédant une première et une seconde extrémité (112, 114), ledit moteur (108) étant raccordé en entraînement à ladite seconde extrémité (114) dudit arbre d'entraînement (110) ;
une courroie d'entraînement (116) coopérant avec ladite première extrémité (112) dudit arbre d'entraînement (110) de sorte que ladite courroie d'entraînement (116) soit entraînée par ledit arbre d'entraînement (110), ladite courroie d'entraînement (116) s'étendant autour dudit atomiseur rotatif (24) de sorte que ladite courroie d'entraînement (116) coopère en entraînement avec ledit atomiseur rotatif (24) pour faire tourner celui-ci autour dudit pistolet mélangeur à haute pression (22).

12. Appareil de revêtement (10) selon la revendication 7, **caractérisé en outre en ce que** l'appareil de revêtement (10) comprend en outre :
une plaque (118) pour dévier le revêtement activé (12) vers ladite configuration de forme conique de ladite surface intérieure (96) de sorte que ledit sommet (98) soit disposé entre ladite plaque (118) et ledit pistolet mélangeur à haute pression (22).

13. Appareil de revêtement (10) selon la revendication 12, **caractérisé en outre en ce que** ladite plaque (118) est fixée à ladite partie avant (88) dudit atomiseur rotatif (24) de sorte que le revêtement activé (12) s'écoule dudit pistolet mélangeur à haute pression (22) à travers ladite ouverture et soit dévié et atomisé par ladite plaque (118) sur ladite configuration de forme conique de ladite surface intérieure (96) de ladite partie avant (88) et de sorte que la rotation de ladite partie avant (88) pousse ledit revêtement activé atomisé (12) à se déplacer par force centrifuge et guidé par ladite surface intérieure (96) pour une application sur la surface intérieure (14) du conduit (16) à revêtir.
